Europäisches Patentamt

European Patent Office

Office européen des brevets

(19)

(11) Publication number: **0 221 733 B1**

# EUROPEAN PATENT SPECIFICATION

(12)

(45) Date of publication of patent specification: **03.04.91**   (51) Int. Cl.⁵: **A01J 7/00**

(21) Application number: **86308254.1**

(22) Date of filing: **23.10.86**

(54) Optical milk flow detector and vacuum shutoff for milker.

(30) Priority: **01.11.85 US 794049**

(43) Date of publication of application:
**13.05.87 Bulletin 87/20**

(45) Publication of the grant of the patent:
**03.04.91 Bulletin 91/14**

(84) Designated Contracting States:
**DE FR GB NL SE**

(56) References cited:
EP-A- 0 097 395     FR-A- 2 169 947
FR-A- 2 206 043     FR-A- 2 494 084
GB-A- 1 414 742     SU-A- 935 022
US-A- 4 190 020     US-A- 4 344 385
US-A- 4 366 772     US-A- 4 447 725

(73) Proprietor: **Babson Bros. Co.**
**1880 Country Farm Drive**
**Naperville Illinois 60540(US)**

(72) Inventor: **Rubino, Daniel Augustion**
**oS456 Kirk**
**Elmhurst Illinois 60126(US)**

(74) Representative: **Chettle, Adrian John et al**
**Withers & Rogers 4, Dyer's Buildings**
**Holborn London EC1N 2JT(GB)**

## Description

This invention is concerned with an optical milk flow detector and an end of milking indicator for a pipeline milking system.

Commercial milk flow detectors with electrical sensing typically used an electrode or probe which extends into the milk flow path. See, for example, Schilling US-A-3115116, Needham et al. US-A-3,773,016 or Swanson et al. US-A-4,344,385. A probe in the milk flow path is undesirable as it may impede milk flow and contributes to cleaning problems.

SU-A-935022 discloses a milk flow detector in accordance with the prior art portion of claim 1, comprising a translucent section of a milk flow path, a light source outside the milk flow path directing light through said translucent wall, the light being blocked by milk in the flow path;

a light sensor outside the milk flow path which receives light from said source only in the absence of milk in the flow path; and a milk flow indicator responsive to said sensor to indicate presence or absence of milk in said flow path.

The present invention is particularly suitable for use in ambient light which is low in infra-red content and is characterized by the provision of an infra-red light source and an infra-red light sensor and by the milk flow path including a hose connectable to milker and connectable with a pipeline through a nipple of translucent material, the detector including a ring mounted around the nipple and having the light source and light sensor diametrically positioned therein; the infra-red wavelengths are particularly susceptible to absorption by fat particles in the milk.

The light sensor is shielded from a ambient light by an opaque cover and is preferably sensitive to radiation impinging only from the source.

Another feature of the invention is the provision of a milk flow detector in which the detector is powered from the pulsator signal circuit. Such a detector is particularly suited for use with a stanchion barn pipeline milking system where the pulsator signal circuit is already in place.

A further feature of the invention is that the light source and light sensor are mounted in an opaque ring. fitted to the nipple of the connector between the milk hose and the pipeline milk valve.

Yet another feature of the invention is that the milkline connector incorporates a pneumatic vacuum shutoff valve.

Further features and advantages of the invention will readily be apparent from the following specification and from the drawings, in which:

Figure 1 is a view of a milking system incorporating one embodiment of the invention;

Figure 2 is a perspective view of the milk hose connector and sensor ring;

Figure 3 is a perspective view of the operator's control unit of the system of Figure 1;

Figure 4 is a view similar to Figure 1 of another embodiment of the invention with automatic shut off and milker retraction;

Figure 5 is an enlarged fragmentary view of a portion of the retraction cylinder of Figure 4 together with the stall cock and pulsator valve;

Figure 6 is an elevation, partially in section, of the milk hose connector and shutoff valve of Figure 4; and

Figure 7 is a schematic diagram of the power supply and control circuit.

The invention is illustrated in a stanchion barn milker system with a carry-away milk pipeline and it is particularly suited for use with such a milking system. However, some of the features of the milk flow sensor and end of milking indicator, as the optical sensor and milk flow detector circuit, for example, may be used in other milking systems.

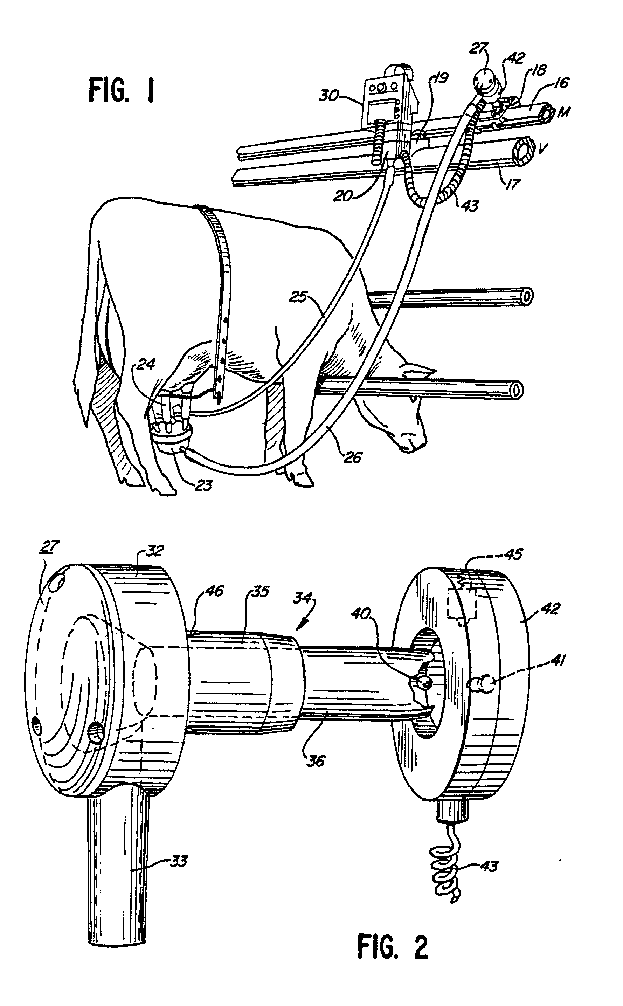

In Figure 1 a cow is shown in a stall of a stanchion barn. Above the cow's head at the front of the stall are an evacuated milk pipeline 16 and a vacuum line 17 to which milker pulsator valves may be connected. The milk line 16 has a milk valve 18 mounted thereon for each pair of stalls. The milk valve may, for example, be of the type shown in Shulick et al. US-A-3,545,719. Similarly, a stall cock 19 is provided on vacuum line 17 for each pair of stalls. The stall cock may be of the type shown in Panock US-A-4,366,772, providing both vacuum and electrical pulsator signals for a pulsator valve 20 connected thereto. Milker unit 23 has teat cups 24 attached to the cow. Pulsator 20 is connected through hose 25 with the teat cup shells. A milk hose 26 is connected from the milker 23 through a sensor elbow 27 with the milk line valve 18. The milk line 16 is typically connected with a bulk storage tank, not shown.

An operator control unit 30 is mounted on the pulsator valve 20. The control unit includes a power supply and control circuit which will be described below. The circuit is powered from the pulsator signal which is available at stall cock 19. It is not necessary that a separate electrical power circuit be installed in the barn in order to utilize the end of milking indicator.

Milk hose 26 and sensor elbow (or valve connector) 27 form a milk flow path from the milker 23 to pipeline 16. Elbow 27, Figure 2, has a plastic body 32 with a nipple 33 to which the milk hose 26 is connected. A second nipple 34 extends at right angles to the nipple 33 and includes a plastic hub 35 which receives a tubular stainless steel shank 36 for insertion into milk valve 18.

An LED light source 40 and a phototransistor light sensor 41 are mounted in diametrically opposed relation in a ring 42 which fits over plastic hub 35. The plastic material of connector 27 is translucent (or transparent). Light from source 40 is directed through the plastic wall of hub 35 and the milk flow path within the hub to the light sensor 42. The LED 40 and phototransistor 41 are connected with control unit 30 through cable 43.

Milk valve 18 is typically located on milk pipeline 16 in the upper quadrant at an angle of 30° to 45° from the horizontal. The weight of milk hose 26 orients the connector 27 so that nipple 33 extends downwardly. Ring 42 is provided with a spring detent 45. The detent is received in a recess 46 at the top of hub 35 so that the diameter of the ring between light source 40 and light sensor 41 is generally horizontal and the light beam is projected across the center of the milk flow path through the hub. When the flowing milk fills more than half of the connector flow path, the light beam is blocked.

The operator control unit is provided with indicators, as lights, which are actuated to show whether the milker is operating automatically or manually, whether milk is flowing and to attract the attention of the operator when the cow has milked out. The milk flow is often intermittent and the milk flow detector circuit includes a time delay, as will appear. An audible indicator may be used rather than or in addition to a visual indicator, particularly for the end of milking indicator.

Light source 40 is preferably an infrared source and light sensor 41 is more sensitive to infrared light than to shorter wavelengths. The milk flow sensor is thus relatively insensitive to ambient natural and artificial light, both of which have little infrared content.

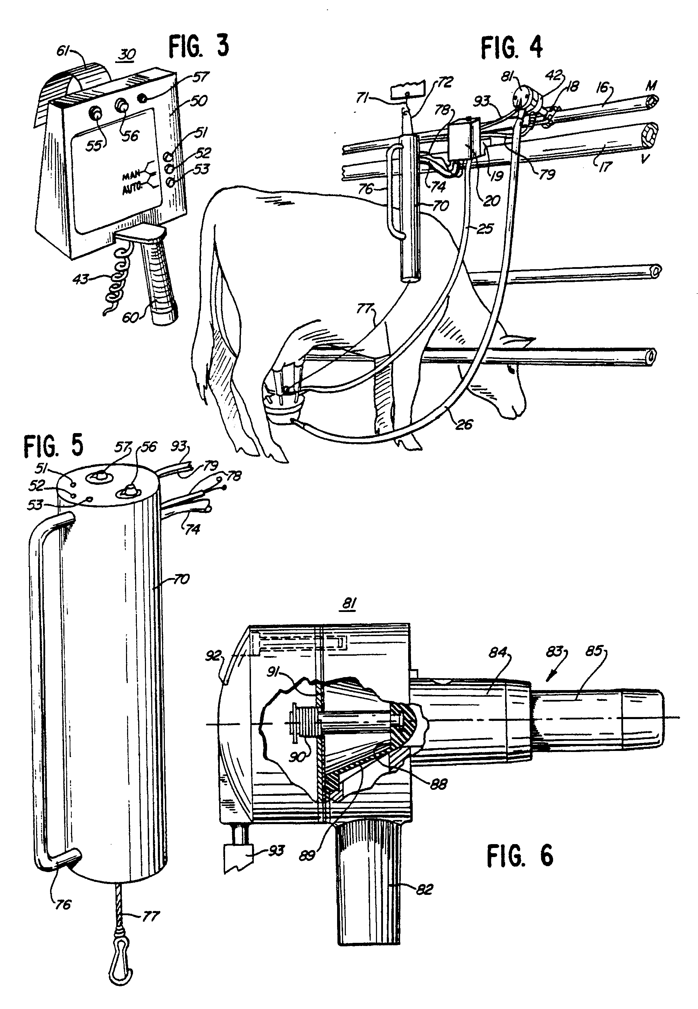

The operator control unit 30, Figure 3, has a front panel 50 with buttons 51, 52 and 53 which are touched by the operator to select automatic or manual operation of the control circuit. Indicator lights 55, 56 and 57 provide a visual indication of the system conditions. White light 55 shows that milk is flowing. Red light 56, together with an audible alarm to be discussed below, is energized when milking is ended. Small red light 57 shows that the system is set for manual rather than automatic operation.

In use, the pulsator 20 is plugged into a stall cock 19. Upon power up the control circuit will be set for automatic operation. The milker unit 23 is attached to the cow. So long as milk continues to flow at greater than a selected rate, the white indicator light 55 will be lit. When the milk flow drops below a rate sufficient to block the infrared light beam from source 40 to the sensor 41 and the selected time delay has expired, the white milk light 55 is extinguished and red end of milking light 56 is lit providing a visual indication to the operator that the cow has milked out. The milker is removed from the cow and attached to the adjacent cow which shares the milk valve 18 and stall cock 19. The control circuit is reset for automatic operation by the operator touching buttons 52, 53. The procedure is then repeated.

In the event the operator wishes to milk a cow without the end of milking indication, buttons 51, 52 are touched. Manual light 57 is lit and the end of milking light 56 will not operate.

After the second cow is milked out, pulsator 20 and milk hose connector 27 are removed from stall cock 19 and milk valve 18 and the entire apparatus is moved to the next milking position. Control unit 30 is provided with a handle 60 depending from the panel 50 to facilitate insertion and removal of the pulsator 20 from stall cock 19 and movement of unit from position to position. A hook 61 may be used to hang the control unit from a pipe or other support.

A modified milking system with automatic end of milking shutoff and milker retraction is illustrated in Figures 4, 5 and 6. The milker and optical sensing system are the same as in Figures 1 and 2 and the same reference numerals will be used to indicate common elements. Only those features of the system which are different will be described in detail.

A pneumatic retraction cylinder 70 is suspended from overhead hook 71 by a bail 72. The cylinder is connected with vacuum at the pulsator valve 20 by a hose 74. Electrical cable 75 is connected with the pulsator electrical circuit. A handle 76 on cylinder 70 facilitates movement of the apparatus between milking positions. Pulsator valve 20 is plugged into stall cock 19 as in Figure 1 and is connected through hose 25 with the shells of teat cups 24. A cord 77 from a piston in retraction cylinder 70 is connected with milker 23. The electrical power supply and the control circuit are mounted on a circuit board located within the upper portion of cylinder 70 and is connected with the pulsator signal circuit through cable 78.

The milk hose connector 81 differs from connector 27 of Figure 2 in that it includes a pneumatically actuated vacuum shutoff valve, as will appear. Flow sensor ring 42 is, however, mounted on the connector as in Figures 1 and 2 and is connected with the control circuit in cylinder 70 by cable 79. The Manual/Automatic buttons 51, 52 and 53 are mounted on top of cylinder 70 and can be actuated by the thumb or forefinger of the operator. Indicator lights 56 (end of milking or retract) and 57 (manual) are also located on top of cylinder 70.

Connector elbow 81, Figure 6, has a nipple 82 to which milk line 26 is connected. A second nipple 83 has a plastic hub 84 and stainless steel connector shank 85. Ring 42 with the light source and sensor are mounted on hub 84 as in Figure 2. The milk flow path through the connector 81 has a valve seat 88 from a resilient, pneumatically operated diaphragm valve 89. A spring 90 between the valve 89 and a plate 91 holds the valve in open position. When the valve is subjected to vacuum in the milk flow path from milk pipeline 16, it closes on seat 88. A cover 92 over the valve forms a pneumatic control chamber and is connected through hose 93 with retraction cylinder 70. When hose 93 is connected with vacuum through a valve (not shown) in cylinder 70, the combined effect of the vacuum and spring 90 opens the shutoff valve 89 for milking.

During the milking operation cord 77 is extended and shutoff valve 89 is open. When the rate of milk flow drops and end of milking is indicated, the vacuum connection in cylinder 70 to hose 93 is broken and valve 89 closes. Thus shuts off vacuum to the milker 23 so that the teat cups 24 will drop from the cow 15. At the same time, a piston within cylinder 70 is retracted lifting the milker 23 on cord 77.

The operator will bridge Automatic contact buttons 52, 53 to release the piston in the cylinder 70 and reconnect vacuum with hose 93, opening shutoff valve 89. The operator pulls the cord 77 out of the cylinder 70 and attaches the milker to the next cow.

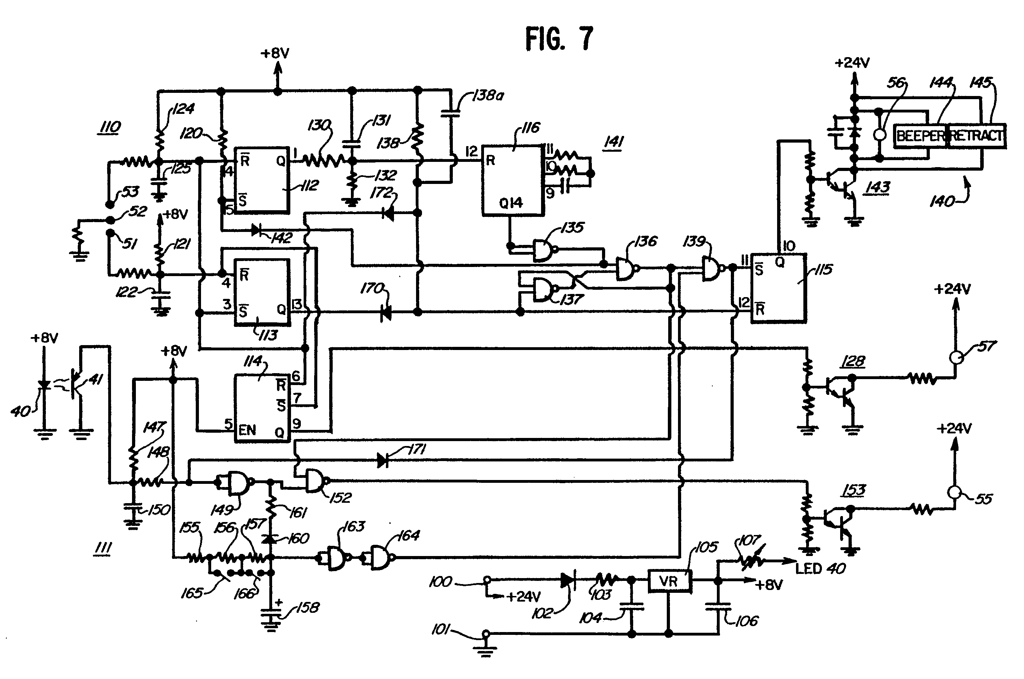

A schematic diagram of the power supply and control circuit is shown in Figure 7. The diagram represents an operative embodiment of a circuit for detecting milk flow and indicating the end of milking. In the description of the circuit some of the elements will be identified with specific component designations and values. It will be understood that these specific parts are not essential to the invention unless required by the claims. Some of the circuit elements, as voltage dividers, and coupling or decoupling components, which are shown in the diagram will not be identified as their purpose is apparent and a description is not necessary to an understanding of the functioning of the circuit.

The power supply has terminals 100, 101 connected with the pulsator circuit which supplies a 24 volt square wave with 50-60 pulses per minute. Terminal 101 is grounded. The pulses are rectified by diode 102 and connected through resistor 103 with filter capacitor 104. A voltage regulator 05 has an 8 volt output used to power the various circuits, as shown. Capacitor 106 provides decoupling and may in practice be several capacitors for the various circuit components. LED 40 is connected with the 8 volt supply through a light intensity potentiometer 107.

The control circuit includes an Automatic/Manual mode circuit 110 and a milk flow detector circuit 111. The principal circuit elements are NAND logic flip-flops 112, 113, 114 and 115 (type 4044), a timer 116 (type 4060) and several two input NAND gates which will be identified below.

When the power supply is connected with the pulsator signal circuit an 8 volt DC operating potential is applied to the control circuit. RC time delays establish initial operation in the Automatic mode as will appear from the following discussion. The 8 volt potential applied to terminal 5 of flip-flop 114 enables each of the four flip-flop circuits. An immediate high potential is applied to $\overline{S}$ terminal 15, flip-flop 112, through resistor 120. Resistor 121, 3.9 megohms, and capacitor 122, .0047μf, delay the application of a high potential to the $\overline{R}$ terminal 4 of flip-flop 113. A second time delay circuit, resistor 124, 3.9 megohms, and capacitor 125, .047μf, has a greater delay time and applies high potentials to the $\overline{R}$ input terminal 14 of flip-flop 112 and to $\overline{S}$ input, terminal 3, flip-flop 113. This sequence of inputs results in flip-flop 112 being reset with Q, terminal 1, low, and flip-flop 113 being set with Q, terminal 13, high. Flip-flop 114 has input $\overline{S}$, terminal 7, connected with the shorter time constant capacitor 122 and input $\overline{R}$, terminal 6, connected with the longer time constant capacitor 125. Q, terminal 9, is low and the switch 128 for Manual light 57 is open.

The Q output of flip-flop 112 is connected through resistor 130, 100,000 ohms, with the junction between capacitor 131, 1μf, and resistor 132, 1 megohm, and the junction is connected with the reset terminal 12 of timer 116. Upon connection with the pulsator circuit, capacitor 131 has no charge and the 8 volt supply voltage appears across resistor 132, resetting timer 116. The Q output of flip-flop 112 is low, as described above, and the voltage at the timer reset terminal drops to ground as capacitor 131 charges. The timer output at Q, terminal 14, is initially low. This signal is applied to both inputs of NAND 135 which has a high output connected with one of the inputs of NAND 136. NANDs 136 and 137 are cross coupled in a flip-flop circuit. The output of NAND 136 is initially low and this signal is connected with one input of NAND 137. The other input of NAND 137 is connected through resistor 138, 3.9 megohms, with the 8 volt supply. Shunt capacitor 138a suppresses noise. The high output of NAND 137 is connected with the second input of NAND 136, maintaining the low output therefrom. NAND 139 has one input connected with the output of NAND 136 and its output is high regardless of the condition of the other input which is connected with the milk flow detector circuit 11. The high output of NAND 139 is connected with $\overline{S}$ input terminal 11 of flip-flop 115. The $\overline{R}$ input terminal 12 of the flip-flop 115 is connected with 8 volt supply through a resistor 138. The initial condition of the output Q, terminal 10, is low and the end of milking indicator circuit 140 is disabled.

Timer 116 operates at a frequency determined by the RC circuit 141. After approximately 60 seconds, timer output Q, terminal 14, goes high. The output of NAND 135 goes low, the output of NAND 136 goes high. This enables the end of milking indicator circuit. If milk is flowing from the cow, the signal to NAND 139 from milk flow detector circuit 111 is low and the output of NAND 139 remains high. When the output of NAND 135 goes low, the $\overline{S}$ input of flip-flop 112 goes low through diode 142. The output Q goes high and discharges capacitor 131. When the cow is milked out, the signal from the milk flow circuit 111 goes high, the output of NAND 139 goes low at the $\overline{S}$ input of flip-flop 115 and Q goes high closing switch 143 to turn on end of milking light 56, energize beeper 144 and actuate the retraction mechanism 145.

In the milk flow detector circuit, phototransistor 41 is connected with the 8 volt supply through resistor 147, 2.2 megohms, and through coupling resistor 148, 10,000 ohms, with the inputs of NAND 149. Capacitor 150, .01μf, is connected from the junction of resistors 147, 148 to ground. When milk flows, transistor 41 does not conduct. The inputs of NAND 149 are high and its output is low. The output of NAND 152 is high, switch 153 conducts and milk light 55 is lit.

An end of milking timing circuit includes resistors 155, 200,000 ohms, 156, 100,000 ohms, and 157, 51,000 ohms, and capacitor 158, 10 microfarads, connected across the 8 volt supply to ground. The junction of resistor 157 and capacitor 148 is connected through diode 160 and resistor 161, 100 ohms, with the output of NAND 149. So long as milk flows, the output of NAND 149 is low and capacitor 158 does not charge. The inputs of NAND 163 are connected with the capacitor 158 and its output is high. The output of NAND 164 is low and is connected with an input of NAND 139. When milk flow ceases, light from LED 40 reaches phototransistor 42 causing it to conduct. The inputs of NAND 149 go low and its output goes high. This backbiases diode 160 allowing capacitor 158 to charge. Switches 165, 166 determine the resistance in the charging circuit and provide a charging time from 2 to 3.5 seconds. If milk flow ceases for the selected time, the inputs of NAND 163 go high, its output goes low and the output of NAND 164 goes high. This causes the output of NAND 139 to go low, triggering flip-flop 115 so that Q goes high and turns on end of milking switch 143. Diode 171 clamps the input of NAND 149 low to inhibit flashing of milk light 55 in the event of splash of milk breaks the light beam after the output of NAND 139 goes low at the end of milking.

Before attaching the milker 23 to the next cow, the operator resets the control circuit by touching buttons 52, 53. The output of flip-flop 112 goes low and timer 116 is reset.

Often the cessation of milk flow is temporary. If flow resumes before the end of milking circuit has timed out, transistor 41 is cut off, the inputs of NAND 149 go high and its output goes low, discharging the partially charged capacitor 158.

If the operator wishes to milk a cow without use of the end of milking indicator, touching the buttons 51, 52 drops the potential at the $\overline{R}$ input of flip-flop 113 causing Q to go low. The $\overline{R}$ input of flip-flop 115 is connected with Q through diode 170 and goes low and the output of flip-flop 115 remains low regardless of milk flow, This disables the end of milking indicator circuit 140. The input $\overline{S}$ of flip-flop 114 also goes low causing the output Q, terminal 9, to go high turning on switch 128 and lighting the Manual light 57.

When the operator wishes to return to Automatic operation, buttons 52, 53 are touched, dropping the potential at $\overline{S}$ input of flip-flop 113 causing the output Q to go high. A momentary low input is coupled to NAND 137 through diode 172. The NAND output goes high and the output of NAND 136 low. The output of NAND 139 and the $\overline{S}$ input of flip-flop 115 go high. The $\overline{R}$ input of flip-flop 115 returns to the high state and, when milk flow ceases, the output Q will go high.

When the control unit is disconnected from the pulsator supply, moved to another location and reconnected, the circuits reset in the Automatic mode as described above.

## Claims

1. An optical milk flow detector for use in a pipeline milking system, said detector comprising a section (27) of the milk flow path having a translucent wall; a light source (40) outside the flow path for directing light through said wall, the light being blocked by milk in the flow path; a light sensor (41) outside the flow path for receiving light from said source (40), the light being received only in the absence of milk in the flow path; and an indicator (56) responsive to said sensor (41) for indicating the presence or absence of milk in the flow path; characterised in that the detector is operable in the presence of ambient light with a low infra-red content, the light source being an infra-red light source (40) and the light sensor being an infra-red light sensor (41), the milk flow path including a hose (26) connectable to a milker (23) and connectable with the pipeline (16) through a nipple (33) of translucent material, the detector further including a ring (42) mountable around said nipple, and having said light source (40) and light sensor (41) diametrically positioned therein.

2. The milk flow detector of claim 1 including positioning means for locating said ring (42) on said nipple (33).

3. The milk flow detector of claim 2 in which the positioning means includes a spring biased detent (45) on one of the parts and a recess (46) to receive the detent in the other part.

4. The milk flow detector of claim 1 in which said milk pipeline (16) is substantially horizontal and said nipple (33) enters the pipeline generally at right angles to the pipeline axis, milk flow through the nipple being in at least the lower portion thereof, and in which the ring (42) is located on the nipple (33) so that light from said source (40) to said sensor (41) is along a generally horizontal diameter of the nipple (33).

5. The milk flow detector of claim 1 in which said indicator is a visual indicator (56).

6. The milk flow detector of claim 1 in which said indicator is an audible indicator.

7. The milk flow detector of claim 1 further including:
   a valve (89) in the milk flow path responsive to the light sensor (41) to move to closed position interrupting the milk flow path and the application of vacuum to the milker; and
   a retractor (77) connected to the milker unit and responsive to the light sensor (41) to retract the milker unit when the milk flow path and vacuum are interrupted.

8. The milk flow detector of claim 1, including a valved milk pipeline connector, which comprises:
   a body (81) having an inlet nipple (82) for connection with a milk hose (26) from the milker unit (23) and an outlet nipple (83) for connection with the milk pipeline (16) and a flow path inside said body between said nipples;
   a valve seat (88) in said flow path;
   a pneumatically operable valve (89) in said body (81) movable toward and away from said valve seat (88), said detector including means for actuating the valve toward the valve seat (88) and thereby close the milk flow path in the absence of milk flow.

9. The milk flow detector of claim 8 in which said valve (89), when subjected to milking vacuum in said milk pipeline, seats on said valve seat (88), closing said flow path.

10. The milk flow detector of claim 9 having a chamber on the side of said valve opposite said valve seat, evacuation of said chamber lifting said valve (89) from said valve seat (88).

11. The milk flow detector of claim 9 having a spring (90) urging said valve (89) away from the valve seat (88).

12. The milk flow detector of claim 1 for a stanchion barn milking system with said evacuated milk pipeline (16) having a milk valve (18), a pulsator vacuum line (25) having a stall cock (19) with electrical pulsator signals, said milker unit (23) having a milk hose (26) for connection with said milk valve and a pulsator (20) for connection with the vacuum line (17) and electrical pulsator signals, and further including:
   a power supply connected with electrical pulsator signals to derive power therefrom and connected with said light sensor (41) to supply power thereto; and
   a control circuit connected with said sensor (41) to derive a milk flow signal therefrom and including means responsive to the milk flow signal for actuating the indicator (30).

13. The milk flow detector of claim 12 in which said power supply and control circuit are mounted on the pulsator (20) which plugs into said stall cock (19).

14. The milk flow detector of claim 12 in which the means for indicating the end of milking includes a pneumatic cylinder (70) for retraction of the milker unit (23) at the end of milking, said power supply and control circuit being mounted in said cylinder.

15. The milk flow detector of claim 1 for a pipeline milking system having an evacuated milk line (16) with a milk valve (18), a pulsator vacuum line (25) with a source of electrical pulsator signals, an electrically operated pulsator valve (20), and the milker unit (23) having a pulsator hose connected with said milk valve, the detector further including:
   an operator control unit (30) for the sensor (41) and indicator (55) having an electrical power connection with the pulsator signals.

16. The milk flow detector of claim 15 in which the milking system includes a stall cock (19) with an electrical connector for pulsator signals on the pulsator vacuum line, the pulsator valve (20) being separably connected with said stall cock (19) and said control unit (30) being mounted on said pulsator valve.

17. The milk flow detector of claim 16 with an operator's handle (60) for the control unit (30) and pulsator valve (20).

18. The milk flow detector of claim 17 in which said control unit (30) has an upright front panel with operator control switches (51, 52, 53) and the handle (60) depends from the front panel.

19. The milk flow detector of claim 15 having a connector elbow (27) between the milk hose (26) and the milk valve (18), the milk flow path being through the elbow defined in part by a translucent wall, said optical milk flow detector including a light source (40) directing light through said translucent wall and a light sensor (41) receiving the light from said source in the absence of milk flow.

20. The milk flow detector of claim 19 in which said elbow (27) has a first nipple (33, 82) connected with the milk hose (26) and a second nipple (34, 83) connected with the milk valve (18), said second nipple (34, 83) having a translucent wall; and including

an optical sensor ring (42) on said second nipple, having said light sensor (40) and light detector (41) mounted in the ring.

21. The milk flow detector of claim 15 including a milker retraction cylinder (70) connected with said milker unit (23), the operator control unit (30) being mounted on said cylinder, a vacuum connection from the cylinder to the pulsator valve (20) and an electrical power connection from said control unit (30) to the pulsator valve (20).

22. The milk flow detector of claim 1 including:
a control circuit having Automatic and Manual modes of operation selectable by an operator; and
an enabling circuit connected with the indicator and with the control circuit, enabling the indicator in the Automatic mode and disabling indicator in the Manual mode.

23. The milk flow detector of claim 1, including:
a control circuit having a timer (116);
an enabling circuit connected with the indicator and with the timer of the control circuit; and

means for resetting the timer at the start of milking to disable the indicator, the enabling circuit being responsive to the timer to enable the indicator after a time delay.

**Revendications**

1. Un détecteur optique d'écoulement de lait prévu pour l'utilisation dans un système de traite à lactoduc, ce détecteur comprenant une section (27) du chemin d'écoulement du lait ayant une paroi translucide; une source de lumière (40) située à l'extérieur du chemin d'écoulement, pour projeter de la lumière à travers la paroi précitée, la lumière étant arrêtée par le lait présent dans le chemin d'écoulement; un capteur de lumière (41) à l'extérieur du chemin d'écoulement, pour recevoir la lumière provenant de la source (40), la lumière n'étant reçue qu'en l'absence de lait dans le chemin d'écoulement; et un indicateur (56) qui fonctionne sous la dépendance du capteur (41) pour indiquer la présence ou l'absence de lait dans le chemin d'écoulement; caractérisé en ce que le détecteur peut fonctionner en présence d'une lumière ambiante contenant une faible proportion de lumière infrarouge, la source de lumière étant une source de lumière infrarouge (40) et le capteur de lumière étant un capteur de lumière infrarouge (41), le chemin d'écoulement du lait comprenant un tuyau flexible (26) qui peut être raccordé à une machine à traire (23) et peut être raccordé à un lactoduc (16) au moyen d'un raccord (33) en une matière translucide, le détecteur comprenant en outre un anneau (42) qui peut être monté autour du raccord, et dans lequel la source de lumière (40) et le capteur de lumière (41) sont placés dans des positions diamétralement opposées.

2. Le détecteur d'écoulement de lait de la revendication 1, comprenant des moyens de positionnement pour positionner l'anneau (42) sur le raccord (33).

3. Le détecteur d'écoulement de lait de la revendication 2, dans lequel les moyens de positionnement comprennent un élément de verrouillage sollicité par un ressort (45) sur l'une des parties et une cavité (46) destinée à recevoir l'élément de verrouillage, dans l'autre partie.

4. Le détecteur d'écoulement de lait selon la revendication 1, dans lequel le lactoduc (16) est pratiquement horizontal et le raccord (33) entre dans le lactoduc dans une orientation qui est de façon générale perpendiculaire à l'axe du lactoduc, l'écoulement du lait à travers le raccord s'effectuant au moins dans la partie inférieure de celui-ci, et dans lequel l'anneau (42) est positionné sur le raccord (33) de façon que la lumière qui provient de la source (40) et qui est dirigée vers le capteur (41) coïncide de façon générale avec un diamètre horizontal du raccord (33).

5. Le détecteur d'écoulement de lait de la revendication 1, dans lequel l'indicateur est un indicateur visuel (56).

6. Le détecteur d'écoulement de lait de la revendication 1, dans lequel l'ndicateur est un indicateur audible.

7. Le détecteur d'écoulement de lait de la revendication 1, comprenant en outre :

　　une soupape (89) dans le chemin d'écoulement du lait, qui fonctionne sous la dépendance du capteur de lumière (41) de façon à se déplacer vers la position fermée, en interrompant le chemin d'écoulement du lait et l'application du vide à la machine à traire; et

　　un élément de rétraction (77) qui est relié à la machine à traire et qui fonctionne sous la dépendance du capteur de lumière (41) de façon à rétracter la machine à traire lorsque le chemin d'écoulement du lait et le vide sont interrompus.

8. Le détecteur d'écoulement de lait de la revendication 1, comprenant un connecteur de lactoduc équipé d'une soupape, qui comporte :

　　un corps (81) ayant un raccord d'entrée (82) destiné à être raccordé à un tuyau flexible d'écoulement de lait (26) provenant de la machine à traire (23), et un raccord de sortie (83) destiné à être raccordé au lactoduc (16), et un chemin d'écoulement à l'intérieur du corps, entre les raccords;

　　un siège de soupape (88) dans le chemin d'écoulement;

　　une soupape (89) pouvant être actionnée de façon pneumatique, dans le corps (81), qui peut être déplacée en direction du siège de soupape (88) et dans la direction opposée, le détecteur comprenant des moyens pour actionner la soupape en direction du siège de soupape (88) et pour interrompre ainsi le chemin d'écoulement du lait en l'absence d'écoulement de lait.

9. Le détecteur d'écoulement de lait de la revendication 8, dans lequel la soupape (89) s'applique sur le siège de soupape (88) et interrompt le chemin d'écoulement, lorsqu' elle est soumise au vide qui est utilisé pour la traite, dans le lactoduc.

10. Le détecteur d'écoulement de lait de la revendication 9, comportant une chambre du côté de la soupape qui est opposé au siège de soupape, et l'établissement du vide dans cette chambre soulève la soupape (89) par rapport au siège de soupape (88).

11. Le détecteur d'écoulement de lait de la revendication 9, comportant un ressort (90) qui sollicite la soupape (89) dans la direction opposée au siège de soupape (88).

12. Le détecteur d'écoulement de lait de la revendication 1, pour un système de traite d'une étable à barreaux, dans lequel le lactoduc à vide (16) comporte une valve à lait (18), un conduit à vide de pulsateur (25) équipé d'un connecteur de stalle (19) pour la transmission de signaux électriques de pulsateur, la machine à traire (23) comportant un tuyau flexible d'écoulement de lait (26) qui est destiné à être relié à la valve à lait, et un pulsateur (20) qui est relié au conduit à vide (17) et qui reçoit des signaux électriques de pulsateur, et comprenant en outre :

　　une alimentation qui reçoit des signaux électriques de pulsateur pour en tirer de l'énergie, et qui est connectée au capteur de lumière (41) pour lui fournir de l'énergie; et

　　un circuit de commande qui est connecté au capteur (41) pour élaborer à partir de ce dernier un signal d'écoulement de lait, ce circuit comprenant des moyens qui réagissent au signal d'écoulement de lait en actionnant l'indicateur (30).

13. Le détecteur d'écoulement de lait de la revendication 12, dans lequel l'alimentation et le circuit de commande sont montés sur le pulsateur (20) qui se branche dans le connecteur de stalle (19).

14. Le détecteur d'écoulement de lait de la revendication 12, dans lequel les moyens d'indication de la fin de la traite comprennent un cylindre pneumatique (70) qui est destiné à rétracter la machine à traire (23) à la fin de la traite, et l'alimentation et le circuit de commande sont montés dans ce cylindre.

15. Le détecteur d'écoulement de lait de la revendication 1, prévu pour un système de traite à lactoduc comprenant un lactoduc à vide (16) équipé d'une valve à lait (18), un conduit à vide de pulsateur (25) avec une source de signaux électriques de pulsateur, une valve de pulsateur (20) actionnée électriquement, et la machine à traire (23) qui comporte un tuyau flexible de pulsateur raccordé à la valve à lait, le détecteur comprenant en outre :

une unité de commande d'opérateur (30) pour le capteur (41) et l'indicateur (55) ayant une connexion d'alimentation électrique qui utilise les signaux de pulsateur.

16. Le détecteur d'écoulement de lait de la revendication 15, dans lequel le système de traite comprend un connecteur de stalle (19), équipé d'un connecteur électrique pour des signaux de pulsateur dans le conduit à vide de pulsateur, la valve de pulsateur (20) étant reliée séparément au connecteur de stalle (19), et l'unité de commande (30) étant montée sur cette valve de pulsateur.

17. Le détecteur d'écoulement de lait de la revendication 16, comportant une poignée d'opérateur (60) pour l'unité de commande (30) et la valve de pulsateur (20).

18. Le détecteur d'écoulement de lait de la revendication 17, dans lequel l'unité de commande (30) comporte un panneau avant vertical équipé d'interrupteurs de commande d'opérateur (51, 52, 53), et la poignée (60) s'étend vers le bas à partir du panneau avant.

19. Le détecteur d'écoulement de lait de la revendication 15, comportant un coude de raccord (27) entre le tuyau flexible de lait (26) et la valve de lait (18), le chemin d'écoulement du lait traversant le coude qui est formé en partie par une paroi translucide, et ce détecteur optique d'écoulement de lait comprenant une source de lumière (40) qui dirige de la lumière à travers la paroi translucide, et un capteur de lumière (41) qui reçoit la lumière provenant de la source, en l'absence d'écoulement de lait.

20. Le détecteur d'écoulement de lait de la revendication 19, dans lequel le coude (27) comporte un premier raccord (33, 82) relié au tuyau flexible de lait (26) et un second raccord (34, 83) relié à la valve de lait (18), ce second raccord (34, 83) ayant une paroi translucide; et comprenant

un anneau de capteur optique (42) sur le second raccord, avec le capteur de lumière (40) et le détecteur de lumière (41) montés dans l'anneau.

21. Le détecteur d'écoulement de lait de la revendication 15, comprenant un cylindre de rétraction de machine à traire (70) qui est relié à la machine à traire (23), l'unité de commande d'opérateur (30) étant montée sur ce cylindre, un conduit à vide s'étendant du cylindre vers la valve de pulsateur (20), et une connexion d'alimentation électrique s'étendant de l'unité de commande (30) vers la valve de pulsateur (20).

22. Le détecteur d'écoulement de lait de la revendication 1, comprenant :

un circuit de commande ayant des modes de fonctionnement Automatique et Manuel qu'un opérateur peut sélectionner; et

un circuit d'activation connecté à l'indicateur et au circuit de commande, qui active l'indicateur dans le mode Automatique et qui désactive l'indicateur dans le mode Manuel.

23. Le détecteur d'écoulement de lait de la revendication 1, comprenant :

un circuit de commande comportant un temporisateur (116);

un circuit d'activation connecté à l'indicateur et au temporisateur du circuit de commande; et

des moyens pour restaurer le temporisateur au début de la traite afin de désactiver l'indicateur, le circuit d'activation réagissant à l'état du temporisateur en activant l'indicateur au bout d'une durée de retard.

## Ansprüche

1. Optischer Milchflußdetektor zur Verwendung in einer pipeline-Melkanlage, wobei der Detektor einen Abschnitt (27) eines Milchflußwegs mit einer lichtdurchlässigen Wand, eine Lichtquelle (40) außerhalb des Flußwegs, die Licht durch die Wand strahlt, wobei das Licht durch die Milch in dem Flußweg unterbrochen wird, einen Lichtfühler (41) außerhalb des Flußwegs zum Empfang des Lichts von der Lichtquelle (40), wobei das Licht nur empfangen wird, wenn keine Milch im Flußweg ist, und eine auf den Lichtfühler (41) ansprechende Anzeige (56) aufweist, die das Vorhandensein oder Nichtvorhandensein von Milch im Flußweg anzeigt;

dadurch gekennzeichnet, daß

der Detektor bei Vorhandensein von Umgebungslicht mit einem Infrarotanteil betreibbar ist,

die Lichtquelle eine Infrarot-Lichtquelle (40) und der Lichtfühler ein Infrarot-Lichtfühler (41) ist,

der Milchflußweg einen Schlauch (26), der mit einem Melkgerät (23) und mit der Pipeline (16) durch einen Stutzen (33) aus lichtdurchlässigem Material verbunden ist, und der Detektor außerdem einen Ring (42) aufweist, der um den Stutzen herum befestigbar ist und der in sich die Lichtquelle (40) und, diametral entgegengesetzt, den Lichtfühler (41) hat.

2. Milchflußdetektor nach Anspruch 1, gekennzeichnet durch eine Befestigungsvorrichtung, um den Ring (42) auf dem Stutzen (33) zu befestigen.

3. Milchflußdetektor nach Anspruch 2, dadurch gekennzeichnet, daß die Befestigungsvorrichtung eine federgespannte Klinke (45) auf einem der Teile und eine Aussparung (46), die die Klinke aufnimmt, auf dem anderen Teil aufweist.

4. Milchflußdetektor nach Anspruch 1, dadurch gekennzeichnet, daß die Milch-Pipeline (16) im wesentlichen horizontal ist und der Stutzen (33) in die Pipeline im wesentlichen rechtwinklig zur Pipeline-Achse eintritt, der Milchfluß durch den Stutzen zumindest in dessen unterem Bereich stattfindet, und der Ring (42) auf dem Stutzen (33) so sitzt, daß Licht von der Lichtquelle (40) zum Fühler (41) längs einer im wesentlichen horizontalen Durchmesserlinie des Stutzens (33) geht.

5. Milchflußdetektor nach Anspruch 1, dadurch gekennzeichnet, daß die Anzeige eine Sichtanzeige (56) ist.

6. Milchflußdetektor nach Anspruch 1, dadurch gekennzeichnet, daß die Anzeige eine Höranzeige ist.

7. Milchflußdetektor nach Anspruch 1, weiterhin gekennzeichnet durch: ein Ventil (89) in dem Milchflußweg, das ansprechend auf den Lichtfühler (41) eine geschlossene Stellung einnimmt, dadurch den Milchflußweg und die Zufuhr des Unterdrucks zum Melkgerät unterbricht; und einen mit der Melkeinheit verbundenen Abzieher (77), der ansprechend auf den Lichtfühler (41) die Melkeinheit abzieht, wenn der Milchflußweg und der Unterdruck unterbrochen sind.

8. Milchflußdetektor nach Anspruch 1, dadurch gekennzeichnet, daß er einen ventilversehenen Milch-Pipeline-Verbinder enthält, der aufweist:

einen Körper (81), der einen Einlaßstutzen für die Verbindung mit einem Milchschlauch (26) von der Melkeinheit (23) und einen Auslaßstutzen (83) für die Verbindung mit der Milch-Pipeline (86) und einen innerhalb des Körpers zwischen den Stutzen ausgebildeten Flußweg hat; einen Ventilsitz (88) in dem Flußweg; ein pneumatisch betätigbares Ventil (89) in dem Körper (81), das hin zum und weg vom Ventilsitz (88) bewegbar ist, wobei der Detektor Mittel zur Betätigung des Ventils in Richtung des Ventilsitzes (88) enthält, wodurch der Milchflußweg bei nicht vorhandenem Milchfluß unterbrochen wird.

9. Milchflußdetektor nach Anspruch 8, dadurch gekennzeichnet, daß das Ventil (39), wenn es einem Melkunterdruck in der Milch-Pipeline unterworfen wird, auf dem Ventilsitz (88) aufsitzt und dadurch den Flußweg unterbricht.

10. Milchflußdetektor nach Anspruch 9, dadurch gekennzeichnet, daß er am Ort des Ventils, dem Ventilsitz gegenüberliegend, eine Kammer hat, die bei vorhandenem Unterdruck das Ventil (89) vom Ventilsitz (88) abhebt.

11. Milchflußdetektor nach Anspruch 9, dadurch gekennzeichnet, daß er eine Feder (90) hat, die das Ventil (89) vom Ventilsitz (88) wegzwingt.

12. Milchflußdetektor nach Anspruch 1, für eine Milchanlage in einem auf Pfeilern stehendem Stall, wobei die bei Unterdruck arbeitende Milch-Pipeline (16) ein Milchventil (18), eine Pulsator-Unterdruckleitung (25), die einen Drosselhahn (19) mit elektrischen Pulsator-Signalen hat, wobei die Melkeinheit (23) einen Milchschlauch (26) zur Verbindung mit dem Milchventil und einen Pulsator (20) zur Verbindung mit der Unterdruckleitung (17) und mit den elektrischen Pulsator-Signalen hat und weiterhin enthält: eine mit den elektrischen Pulsator-Signalen verbundende Stromquelle zur Leistungserzeugung, die mit dem Lichtfühler (41) zu dessen Stromversorgung verbunden ist; und eine Steuerschaltung, die mit dem Fühler (41) verbunden ist und von diesem ein Milchflußsignal empfängt und Mittel enthält, die ansprechend auf das Milchflußsignal die Anzeige (30) betätigen.

13. Milchflußdetektor nach Anspruch 12, dadurch gekennzeichnet, daß die Stromversorgung und die Steuerschaltung an dem Pulsator (20) befestigt sind, der in dem Drosselhahn (19) steckt.

14. Milchflußdetektor nach Anspruch 12, dadurch gekennzeichnet, daß die Mittel, die das Melkende angeben, einen pneumatischen Zylinder (70) zum Abziehen der Melkeinheit (23) beim Melkende enthalten, wobei die Stromversorgung und die Steuerschaltung in dem Zylinder untergebracht sind.

15. Milchflußdetektor nach Anspruch 1, für ein Pipeline-Melksystem, gekennzeichnet durch eine evakuierte Milchleitung (16) mit einem Milchventil (18), eine Pulsator-Vakuumleitung (25) mit einer Quelle für elektrische Pulsatorsignale, ein elektrisch betriebenes Pulsatorventil (20) und die Melkeinheit (23), welche einen mit dem Milchventil verbundene Pulsatorschlauch hat, wobei der Detektor weiterhin aufweist: eine Bediener-Steuereinheit (30) für den Fühler (41) und die Anzeige (55), die in elektrischer Leistungsverbindung mit den Pulsator-Signalen steht.

16. Milchflußdetektor nach Anspruch 15, dadurch gekennzeichnet, daß die Melkanlage einen Drosselhahn (19) mit einem elektrischen Verbinder für Pulsator-Signale auf der Pulsator-Unterdruckleitung enthält, wobei das Pulsatorventil (20) trennbar mit dem Drosselhahn (19) verbunden und die Steuereinheit (30) an dem Pulsatorventil befestigt ist.

17. Milchflußdetektor nach Anspruch 16, gekennzeichnet durch einen Griffbügel (60) für die Steuereinheit (30) und das Pulsatorventil (20).

18. Milchflußdetektor nach Anspruch 17, dadurch gekennzeichnet, daß die Steuereinheit (30) eine aufrechte Frontplatte mit Bedienungssteuerschaltung (51, 52, 53) hat, wobei der Griff (60) von der Frontplatte herabhängt.

19. Milchflußdetektor nach Anspruch 15, dadurch gekennzeichnet, daß ein Verbindungskrümmer (27) zwischen Milchschlauch (26) und Milchventil (18) vorgesehen ist, der Milchflußweg durch den Krümmer teilweise durch eine lichtdurchlässige Wand gebildet ist, der Milchflußdetektor eine Licht durch die lichtdurchlässige Wand werfende Lichtquelle (40) und einen Lichtfühler (41) aufweist, der das Licht von der Lichtquelle bei nicht vorhandenem Milchfluß empfängt.

20. Milchflußdetektor nach Anspruch 19, dadurch gekennzeichnet, daß der Krümmer (27) einen ersten Stutzen (33, 82), der mit dem Milchschlauch (26) verbunden ist, und einen zweiten Stutzen (34, 83) aufweist, der mit dem Milchventil (18) verbunden ist, wobei der zweite Stutzen (34, 83) eine lichtdurchlässige Wand hat; und auf dem zweiten Stutzen einen optischen Sensorring (42) enthält, der die Lichtquelle (40) und den Lichtfühler (41), befestigt im Ring aufweist.

21. Milchflußdetektor nach Anspruch 15, dadurch gekennzeichnet, daß ein Melker-Abziehzylinder (70) enthalten ist, der mit der Melkeinheit (23) verbunden ist, die Bediener-Steuereinheit (30) an dem Zylinder angebracht ist, und eine Unterdruck-Verbindung vom Zylinder zum Pulsatorventil (20) und eine elektrische Leistungsverbindung von der Steuereinheit (30) zum Pulsatorventil (20) geführt sind.

22. Milchflußdetektor nach Anspruch 1, dadurch gekennzeichnet, daß eine Steuerschaltung mit automatischem und Handbetrieb die von einer Bedienperson wählbar sind und eine mit der Anzeige und mit der Steuerschaltung verbundene Freigabeschaltung enthalten sind, die die Anzeige für den automatischen Betrieb freigibt und sie für den Handbetrieb sperrt.

23. Milchflußdetektor nach Anspruch 1, dadurch gekennzeichnet, daß eine Steuerschaltung mit einem Zeitgeber (116), eine mit der Anzeige und mit dem Zeitgeber der Steuerschaltung verbundene Freigabeschaltung, und Mittel enthalten sind, die den Zeitgeber beim Melkbeginn zum Sperren der Anzeige zurücksetzen, wobei die Freigabeschaltung auf den Zeitgeber ansprechend die Anzeige nach einer Verzögerungszeit freigibt.

FIG. 1

FIG. 2

**FIG. 3**

**FIG. 4**

**FIG. 5**

**FIG. 6**

13

# FIG. 7

EP 0 221 733 B1